(19) Europäisches Patentamt / European Patent Office / Office européen des brevets

(11) **EP 2 626 827 A1**

(12) **EUROPEAN PATENT APPLICATION**

(43) Date of publication:
**14.08.2013 Bulletin 2013/33**

(51) Int Cl.:
*G06Q 30/02* (2012.01)      *G06Q 30/00* (2012.01)

(21) Application number: **13154166.6**

(22) Date of filing: **06.02.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.02.2012 IN MU03862012**

(71) Applicant: **Tata Consultancy Services Limited**
**400021 Mumbay (IN)**

(72) Inventors:
• **Mohapatra, Mihir Prasad**
**751 024 Bhubaneswar, Orissa (IN)**
• **Sahu, Deepika**
**751 024 Bhubaneswar, Orissa (IN)**
• **Chowdhury, Saroj**
**751 024 Bhubaneswar, Orissa (IN)**
• **Panda, Debabrata**
**751 024 Bhubaneswar, Orissa (IN)**

(74) Representative: **Manitz, Finsterwald & Partner GbR**
**Martin-Greif-Strasse 1**
**80336 München (DE)**

(54) **Product pricing in e-commerce**

(57)      Systems and methods for dynamically fixing price of a product in an electronic commerce (e-commerce) environment are described. In one embodiment, the method comprises obtaining product information associated with the product. Further, the method comprises extracting a real time market price of at least one product constituent indicated in the product information from at least one market information source. Furthermore, the method comprises evaluating a market price factor for the product based on the extracting, where the market price factor is indicative of impact of market conditions onto the price of the product. Based at least on the product information and the market price factor, a real time selling price of the product may be fixed.

Fig. 1

**Description**

TECHNICAL FIELD

The present subject matter, in general, relates to product pricing, and in particular, relates to dynamically fixing price of products in an electronic commerce environment.

BACKGROUND

Electronic commerce (also referred as e-commerce) generally involves the display and sales of goods over a computer network. E-commerce has exploded in popularity in recent years, as more and more people use computer networks. E-commerce continues to evolve from a means of providing an easy way of accessing and/or publishing information on the Internet to a virtual marketplace where almost every type of merchandise can be traded, as it is traded in the physical world.

In general, most of e-commerce portals or portals provide product information, such as images of the products, price of the products, promotional offers associated with the products, and other product specifications. The product information is displayed on the e-commerce portals that are accessible to customers. Typically, a potential customer can visit an e-commerce portal, browse through various products, and selects the products of interest for purchase. A pricing and billing engine associated with the e-commerce portal computes total price of the selected products, and displays the same to the customer on the graphical user interface of the e-commerce portal and receives payment from the customer to complete the transaction.

SUMMARY

This summary is provided to introduce concepts related to dynamically fixing price of products in an e-commerce environment and the concepts are further described below in the detailed description. This summary is neither intended to identify essential features of the claimed subject matter nor is it intended for use in determining or limiting the scope of the claimed subject matter.

Systems and methods for dynamically fixing price of a product in an e-commerce environment are been described. In one implementation, the method comprises obtaining product information associated with the product. Further, the method comprises extracting a real time market price of at least one product constituent indicated in the product information from at least one market information source. Furthermore, the method comprises evaluating a market price factor for the product based on the extracting, where the market price factor is indicative of impact of market conditions onto the price of the product. Based at least on the product information and the market price factor, a real time selling price of the product may be fixed.

BRIEF DESCRIPTION OF DRAWINGS

The detailed description is provided with reference to the accompanying figures. In the figures, the left-most digit(s) of a reference number identifies the figure in which the reference number first appears. The same numbers are used throughout the drawings to reference like features and components.

Fig. 1 illustrates a network environment implementing an e-commerce system, according to an embodiment of the present subject matter.

Fig. 2 illustrates components of the e-commerce system, according to an embodiment of the present subject matter.

Fig. 3 illustrates a method for dynamically fixing price of a product in an e-commerce environment, according to an embodiment of the present subject matter.

DETAILED DESCRIPTION

The present subject matter relates to method(s) and system(s) for dynamically fixing of price of products in an e-commerce environment.

In a typical e-commerce portal, product information, such as images of the products, price of the products, promotional offers associated with the products, and product specifications, pertaining to a product or to a group of products, are displayed on the e-commerce portal. A customer may then browse the e-commerce portal and select product(s) of interest. The selected products may be placed in a virtual shopping cart or bucket for further processing. The total price for all the products placed in the virtual shopping chart may then be calculated and displayed to the customer on the e-commerce portal. The total price of the product may include costs for shipping, tax (if any), and the like. The customer may then make payment according to the calculated price.

Generally, price of particular product or group of products may change owing to various factors like market conditions, environmental factors, availability of the products, and the like. Further, certain markets changes occur so fast that there may be insufficient time to either set a fixed price or engage in lengthy negotiations. For example, the price of a gold ornament may change frequently due to changes in the market price of gold. By the time information about such changes are gathered and price of the product is fixed, market conditions may again undergo a change. The conventional methods of computing price of products in e-commerce environment fail to take into account such dynamic changes that may impact the real time price of the product. This may result in customer paying an increased or a decreased price for the product, such as a gold ornament than the actual price, which in turn results in a loss to either the customer or vendor.

Further, the conventional methods takes into account basic product attributes, such as type of product, raw material used in manufacturing or enhancement of the product, hereinafter referred to as product constituents, and total weight of the product, for computing price of the product. Any other attributes of market fluctuations are typically not considered in the conventional methods.

In accordance with the present subject matter, systems and methods for dynamically fixing price of products in an e-commerce environment are described. The present subject matter provides for real time and accurate pricing of products in the e-commerce environment. To dynamically fix the price of products, the systems and methods of the present subject matter takes into consideration real time market conditions that frequently influence price of the product, and thus saves customers or vendors paying increased or decreased price of the product at any point of time. Further, the systems and methods also take into consideration product information such as, various specific product attributes details about each product constituents, and manufacturing complexity of the product, which is in turn indicative of design of the product, amount of labor work employed during manufacturing of the product, equipments used during manufacturing of the product, and the like.

In an implementation, the product information associated with the product on an e-commerce portal may be obtained from a database, such as a legacy system database or a centralized database containing product information about all the products being displayed on the e-commerce portal for sale. The product information may indicate about characteristics of the product, such as product name, product number, total weight of the product, size of the product, constituents of the product, weight of each of the constituents, and the like. Further, the product information may also indicate about manufacturing complexity of the product based on design attributes, manufacturing process, and the like of the product. In an implementation, the product information may be obtained or extracted, selectively, from the database based on various pre-defined information extraction rules.

Based on the product information, a market price factor is evaluated. The market price factor indicates the impact of market conditions on the price of the product. Such a market price factor is evaluated based on extracting real time market price of one or more product constituents indicated in the product information, and analyzing impact of the extracted real time market price on current price of the product.

Subsequent to the evaluation, real time selling price of the product is computed based at least on the market price factor and the product information. The present subject matter provides for transparent and loss less business transactions as the real time selling price of the product is dynamically fixed based on product attributes such as weight of each constituent of the product, manufacturing process, labor charges, and the like as well as real time market price of each constituent of the product. In one implementation, the computed real time selling price of the product is displayed on the e-commerce portal.

The above methods and systems are further described in conjunction with the following figures. It should be noted that the description and figures merely illustrate the principles of the present subject matter. It will thus be appreciated that those skilled in the art will be able to devise various arrangements that, although not explicitly described or shown herein, embody the principles of the present subject matter and are included within its spirit and scope. Furthermore, all examples recited herein are principally intended expressly to be only for pedagogical purposes to aid the reader in understanding the principles of the present subject matter and the concepts contributed by the inventor(s) to furthering the art, and are to be construed as being without limitation to such specifically recited examples and conditions. Moreover, all statements herein reciting principles, aspects, and embodiments of the present subject matter, as well as specific examples thereof, are intended to encompass equivalents thereof.

While aspects of described systems and methods for dynamically fixing price of products can be implemented in any number of different computing devices, environments, and/or configurations, the embodiments are described in the context of the following exemplary system(s) and method(s).

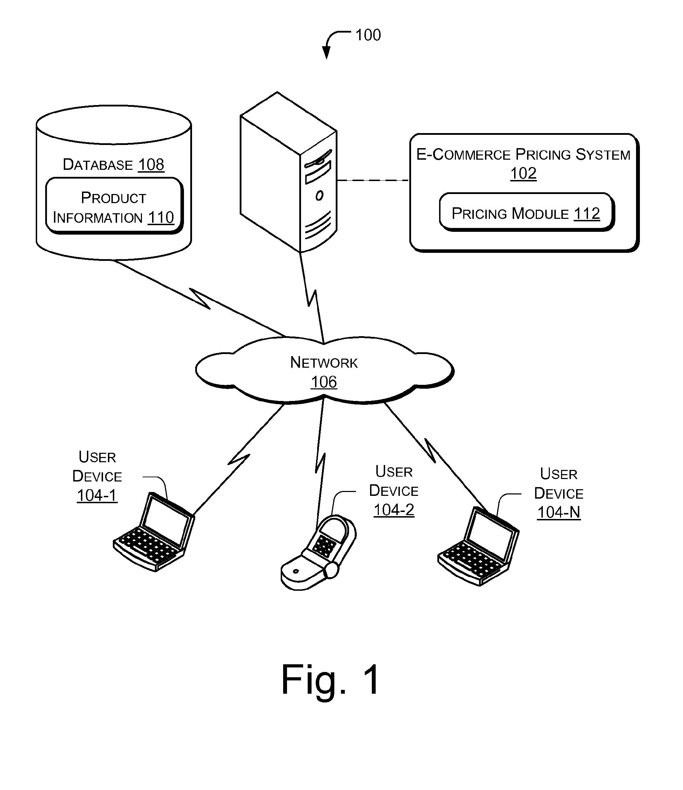

Fig. 1 illustrates a network environment 100 implementing an e-commerce system 102, according to an embodiment of the present subject matter. In the environment 100, the e-commerce system 102 is connected to one or more user devices 104-1, 104-2, ..., 104-N via a network 106. For the purpose of explanation and clarity, the user devices 104-1, 104-2... 104-N, are hereinafter collectively referred to as user devices 104 and hereinafter individually referred to user device 104.

The network 106 may be a wireless network, a wired network, or a combination thereof. The network 106 can also be an individual network or a collection of many such individual networks, interconnected with each other and functioning as a single large network, e.g., the Internet or an intranet. The network 106 can be implemented as one of the different types of networks, such as intranet, local area network (LAN), wide area network (WAN), the internet, and the like. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), etc., to communicate with each other. Further, the network 106 may include network devices, such as network switches, hubs, and routers for providing a link between the e-commerce system 102 and the user devices 104. The network devices within the network 106 may interact with the e-commerce system 102 and the user device 104 through the communication links.

The e-commerce system 102 and the user devices 104 can be implemented as any of a variety of conventional computing devices including, for example, servers, a desktop PC, a notebook or a portable computer, a workstation, a mainframe computer, and an Internet appliance. In an implementation, the e-commerce system 102 may be linked to a database 108. The e-commerce system 102 may be linked to the database 108 through the network 106. The database 108 may serve as a repository for storing product information 110 about the product available in the stock for sale on the e-commerce portal. Further, the database 108 may be a legacy database, or a central repository associated with the e-commerce system 102. In one implementation, the database 108 may be implemented as an internal repository within the e-commerce system 102.

The e-commerce system 102 amongst other components includes a pricing module 112. In an implementation, the pricing module 112 obtains product information 110 from the database 108. Based on the product information 110, the pricing module 112 dynamically fixes price of the product, i.e., the pricing module 112 computes a real time selling price for the product. In one implementation, the pricing module 112 may be implemented as a separate system, which is associated with the e-commerce system 102, through the network 106, and communicates with the e-commerce system 102 to facilitate dynamic fixing of real time selling price of the products.

The product information 110 may include basic product attributes, specific product attributes and complexity attributes. The basic product attributes may include product type, product category, constituents of the product, total weight of the product, shape of the product, size of the product, and the like. Such basic product attributes may be identified using a product identifier assigned to each product. For example, a product identifier 'XX' indicates that the product is a stone studded gold ring, which is a jewelry item, of circular shape. The total weight of such ring is 50 grams, and the constituents of this ring include stone and gold.

The specific product attributes may include weight of each of the constituents (interchangeably referred to as product constituents), and manufacturing details of the product. Such specific product attributes may be identified using a lot number assigned to each product. For example, a lot number '3IFHP00003' associated with the product, when analyzed in a fragmented form may indicate certain specific product attributes. In said example, '31' indicates that the product is manufactured in-house, 'F' indicates that the manufacturing location as Delhi/NCR region, and '00003' indicates serial number of the product. Further, 'P' may indicate other specific product attributes such as weight of each product constituent, and the like. Referring to the example of the stone studded gold ring, 'P' may indicate that the weight of gold is 30 grams and the weight of the stone is 20 grams.

The complexity attributes may indicate design of the product, resources, such as labor or manufacturing equipments used for manufacturing the product, time taken for the manufacturing of the product, and the like. Such complexity attributes may be identified using a complexity code assigned to each product. For example, a complexity code '062' indicates that the product is of plain studded design, the labor used for manufacturing of the product is extensive, and the manufacturing equipments used for manufacturing of the product involves expensive equipments.

Based on the product information 110, the pricing module 112 evaluates a market price factor for the product. As described previously, the market price factor indicates about the impact of market conditions onto the price of the product. For example, in case of product items made of gold, the pricing module 112 evaluates the impact of market conditions, i.e., fluctuations in market rate of gold on the price of the product. Based on the market price factor and product information 110, the pricing module 112 computes a real time selling price of the product, which is also referred to as dynamic price of the product.

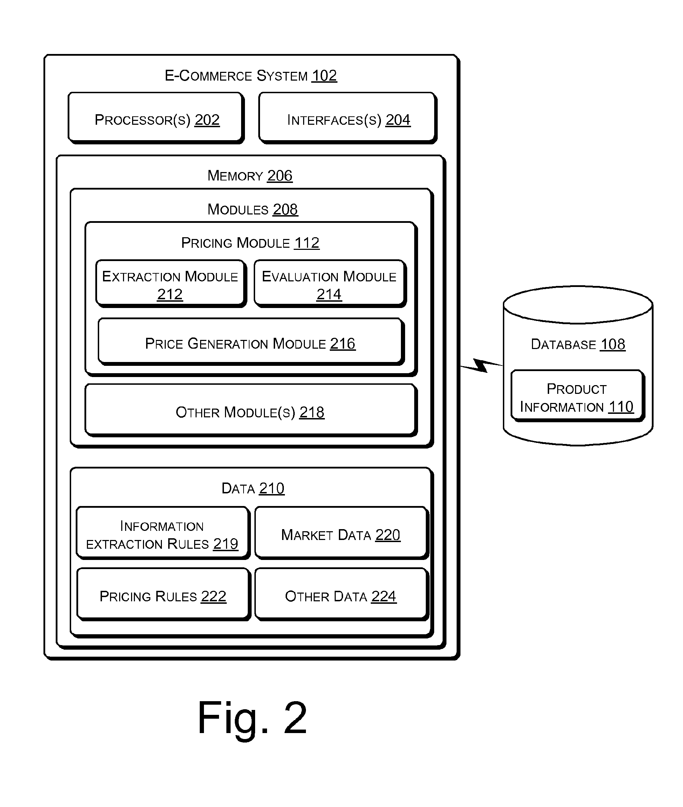

Fig. 2 illustrates various components of the e-commerce system 102, according to an embodiment of the present subject matter. The e-commerce system 102 includes one or more processor(s) 202, one or more interfaces 204 and a memory, such as a memory 206, coupled to the processor(s) 202.

The interfaces 204 may include a variety of software and hardware interfaces, for example, interfaces for peripheral device(s), such as a keyboard, a mouse, an external memory, and a printer. The interfaces 204 can facilitate multiple communications within a wide variety of networks and protocol types, including wired networks, for example, local area network (LAN), cable, etc., and wireless networks, such as Wireless LAN (WLAN), cellular, or satellite. For the purpose, the interfaces 204 may include one or more ports for connecting a number of devices to each other or to another computing system.

The processor 202 can be a single processing unit or a number of units, all of which could include multiple computing units. The processor 202 may be implemented as one or more microprocessors, microcomputers, microcontrollers, digital signal processors, central processing units, state machines, logic circuitries, and/or any devices that manipulate signals based on operational instructions. Among other capabilities, the processor 202 is configured to fetch and execute computer-readable instructions and data stored in the memory 206.

The functions of the various elements shown in the figures, including any functional blocks labeled as "processor (s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage.

The memory 206 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory 206 includes module(s) 208 and data 210. The modules 208, amongst other things, include routines, programs, objects, components, data structures, etc., which perform particular tasks or implement particular abstract data types. The modules 208 may include the pricing module 112 and other module(s) 218. The other modules 218 may include programs or coded instructions that supplement applications and functions on the e-commerce system 102, for example, programs in the operating system. In an implementation, the pricing module 112 may include an extraction module 212, an evaluation module 214, and a price generation module 216.

The data 210, amongst other things, serves as a repository for storing data processed, received, and generated by one or more of the modules 208. The data 210 includes information extraction rules 219, market data 220, pricing rules 222, and other data 224. The other data 224 may include data generated as a result of the execution of one or more modules in the other module(s) 218.

In operation, the extraction module 212 obtains the product information 110 associated with the product from the database 108. In one implementation, the extraction module 212 extract entire production information associated with the product from the database 108. In another implementation, the extraction module 212 is configured to extract selective production information, for example, information which is relevant for the purpose of computation of real time selling price of the product, from the database 108 based on pre-defined information extraction rules 219, wherein the information extraction rules 219 are configurable. As already described, the product information 110 may include product type, product category, current price of the product, constituents of the product, current price of the product constituents, total weight of the product, weight of each of the product constituents, complexity attributes of the product indicating about design of the product, resources, such as labor, manufacturing equipments used for manufacturing the product, time taken for the manufacturing of the product, etc.

In an example, the product includes a jewelry item displayed on the e-commerce portal. In said example, the extraction module 212 extracts the product information 110 associated with the jewelry item from the database 108. As an instance, the extraction module 212 extracts the product information 110 including product type (Ring), product category (jewelry item), product constituents (gold and silver), total weight of product (100 grams), weight of each product constituents (gold: 80 grams; silver: 20 grams), design attributes (carved with silver on the top), current price of the product, current price of the product constituents etc. from the database 108.

Based on the product information 110, the evaluation module 214 evaluates a market price factor for the product. As indicated previously, the market price factor is based on a market price of constituents associated with the product. The evaluation module 214 extracts real time market price of each of the product constituents from a market information source. The market information source may be an external data source, such as World Wide Web (web) or an internal data source, such as a repository, namely, market data 220, maintained within the e-commerce system 102, containing updated market price information. Upon extraction, the evaluation module 214 compares the extracted real time market price of product constituent with the current price of the product constituent to determine changes in the price of the product constituents, thereby analyzing the impact of the market conditions on the overall price of the product. Larger is the difference between the extracted real time price and current price of the product constituents, greater is the impact of the market conditions on the price of the product. In the jewelry item example indicated above, the evaluation module 214 extracts the real time market price of gold and silver, and analyzes the impact of such real time market price on the current price of the jewelry item.

Based on the market price factor and the product information 110, the price generation module 216 may compute a real time selling price for the product. In one implementation, the price generation module 216 may apply predefined pricing rules 222 to compute the real time selling price for the product.

In an implementation, the price generation module 216 may be configured to generate the real time selling price based on various other parameters, such as discounts and additional expenses for the product. The additional expenses may include tax (if any), shipping charges, and add-on charges as applicable. In an example, the tax calculation may be done after calculating the selling price of the product. In another example, the tax calculation may also be done before the calculation of the final selling price of the product. The various tax calculation options may be integrated into the e-commerce system 102 as per the needs of a vendor who is offering the products for sale on the e-commerce portal.

In another implementation, the price generation module 216 may be configured to generate the real time selling price of the product for uniform cost price products as well as non-uniform cost price products. The uniform cost price products may include products that are manufactured using a single constituent whereas the non-uniform cost price products may include products that are manufactured using two or more constituents. For example, a necklace manufactured using only gold may be considered as a uniform cost price product while a necklace manufactured using gold and silver may be considered as a non-uniform cost price product.

In one implementation, the price generation module 216 may compute the real time selling price for the product in the following manner:

The price generation module 216 may initially compute the overall price of the product constituents based on the product information 110, such as current price of each of the product constituents, and the market price factor that is indicative of the changes in the price of the product upon changes in the market conditions. In said implementation, the price generation module 216 may compute the overall price of the product constituents using the following equation (1):

$$P_T = P_C + M_F \qquad \qquad ...(1)$$

*Wherein, the $P_T$ = Overall Price of the product constituent;*

*$P_C$ = Current price of the product constituent as indicated in the product information; and*
*$M_F$ = Market price factor indicating difference in the current price and the real time market price of the product constituents.*

Based on the price of the product constituents, the price generation module 216 computes a unit price or base price of the product. The unit price or base price of the product may be a price of the product excluding any discounts to be given, shipping charges, tax (if any) and the like for that product. While computing the unit price of the product, the price generation module 216 also takes into consideration, the manufacturing charges associated with the product. Such manufacturing charges or manufacturing cost may be computed based on making charges, types of equipment used during the manufacturing of the product and/or wastage cost involving waste of product constituents while manufacturing of the product. In one implementation, the price generation module 216 computes the unit price of the product using the following equation (2):

$$P_{UI} = P_T + M_C \qquad \qquad ...(2)$$

*Wherein, the $P_{UI}$ = Unit price or base price of the product;*

*$P_T$ = Overall price of the product constituents computed using the equation (1); and*
*$M_C$ = Manufacturing charges, which is addition of making charges and wastage cost.*

Based on the unit price of the product, the price generation module 216 computes total invoice value for the product. While computation of the total invoice, the price generation module 216 also takes discount on the product into consideration. The discount on the product may be calculated, for example, based on the discount on the manufacturing charges and discount based on customer loyalty, and/or seasonal discounts. In one implementation, the price generation module 216 computes the total invoice value using the following equation (3):

$$I = P_{UI} - D \qquad \qquad ...(3)$$

*Wherein, the I = Total invoice value for the product;*

$P_{UI}$ = Unit price or basic price of the product computed using the equation (2); and
$D$ = Discount on the product.

The price generation module 216 then computes the real time selling price for the product based on the total invoice value and tax amount. The tax amount may be calculated based on the tax percentage take from Central Sales Tax (CST) and Value Added Tax (VAT). For example, CST may be applicable for sending orders across different states, and VAT may be applicable for sending orders within same state, where warehouse of the product is located. In one implementation, the price generation module 216 computes the real time selling price using the following equation (4):

$$P_S = I + T \qquad \qquad \dots(4)$$

Wherein, the $P_S$ = Real time selling price for the product;

$I$ = Total invoice value for the product as computed using the equation (3); and
$T$ = Tax amount on the product.

In one implementation, the price generation module 216 may display the computed real time selling price of the products on the e-commerce portal. Such a provision ensures that the price of the product is updated based on the changing market price of one or more constituents associated with the product. Thus, the real time selling price calculation and display provides for a transparency in between the customer and the vendor ensuring loss less business transactions.
For example, if a customer wishes to buy a product displayed on the e-commerce portal, the e-commerce system 102 may display a real time selling price of the product during a checkout process. The real time selling price of the product may be exclusive of all charges including tax, shipping costs, and any additional charges (if applicable). In another example, during the time when a customer browses through the portal for various products, the customer may be notified about the change in the selling price of a particular product, in real time. Such a provision may ensure that business transactions have transparency.

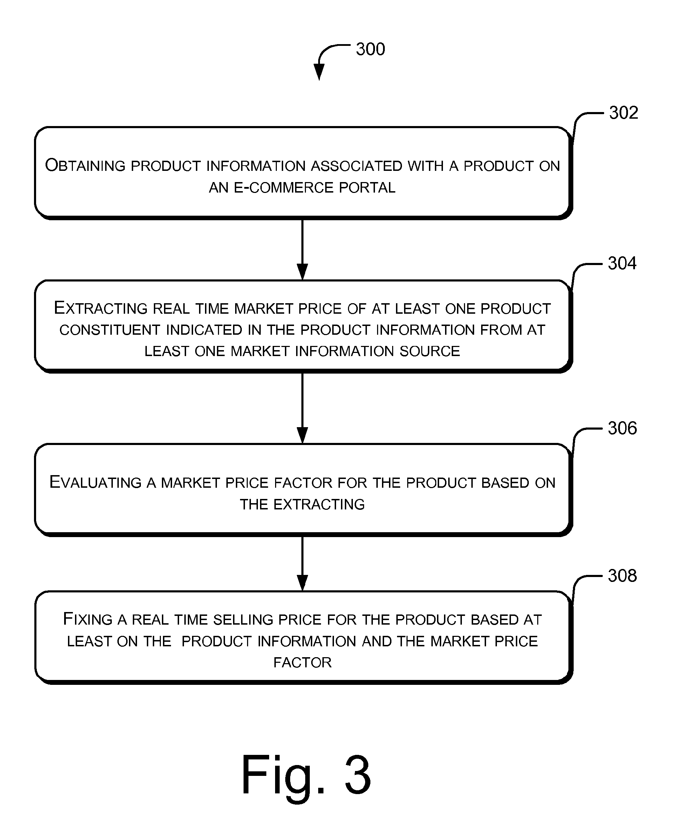

Fig. 3 illustrates a method 300 for a method for dynamically fixing a price of a product in an e-commerce environment, according to an implementation of the present subject matter. According to an aspect, the concepts of dynamically fixing price of products in an e-commerce environment are described with reference to the e-commerce system 102.
The method(s) may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices.
The order in which the method is described is not intended to be construed as a limitation, and any number of the described method blocks can be combined in any order to implement the method, or an alternative method. Additionally, individual blocks may be deleted from the methods without departing from the spirit and scope of the subject matter described herein. Furthermore, the method can be implemented in any suitable hardware, software, firmware, or combination thereof.
Referring to the fig. 3, at block 302, the product information associated with a product on an e-commerce portal is obtained. The product information may be indicative of at least characteristics of the product and manufacturing complexity of the product. In one implementation, the pricing module 110 of the e-commerce system 102 obtains the production information 110 from one or more product information sources. The product information sources may include, a product database, such as the database 108. The database 108 referred herein may be a legacy database or central repository associated with the e-commerce system 102, containing information about the products available for sale on the e-commerce portal. The product information 110 may include basic product attributes like the product type, product category, product constituents, total weight of the product and current price of the product. Further the product information 110 may include specific product attributes, such as weight of each of the product constituents. Furthermore, the product information 110 may include complexity attributes, such as complexity codes indicative of complexities involved in manufacturing the product. Such complexities may be with respect to design of the product, process of manufacturing the product, and amount of labor work or types of equipments used for manufacturing the product. As already described, the product information 110 may be obtained from the database 108, based on pre-defined information extraction rules 219 configured within the e-commerce system 102.
At the block 304, real time market price of at least one product constituent indicated in the product information 110 is extracted from at least one market information source. The market information source referred herein may be an external data source, such as World Wide Web (web), or an internal data source, such as a repository maintained within the e-commerce system 102 containing updated market price information. In one implementation, the pricing module 112 extracts the real time market price of one or more product constituents indicated in the product information 110 from the market information source.

At the block 306, a market price factor may be evaluated for the product based on the extracting, i.e., based on the extracted real time market price. In one implementation, the pricing module 112 compare the extracted real time market price of product constituent with the current price of the product constituent to determine changes in the price of the product constituents, thereby analyzing the impact of the market conditions on the overall price of the product. Larger is the difference between the extracted real time price and current price of the product constituents, greater is the impact of the market conditions on the price of the product. For example, for a product 'gold ring', the market price factor is evaluated based on the real time market price of gold.

At the block 308, a real time selling price for the product is fixed or computed based on the market price factor and the product information. In one implementation, the pricing module 112 of the e-commerce system 102 generates the real time selling price for the product based on the market price factor and the product information 110. The pricing module 112, for example, applies predefined pricing rules to fix or compute the real time selling price for the product. In one implementation, the pricing module 112 displays the computed real time selling pricing on the e-commerce portal.

Although embodiments for methods and systems for dynamically fixing price of the products in an e-commerce environment have been described in a language specific to structural features and/or methods, it is to be understood that the invention is not necessarily limited to the specific features or methods described. Rather, the specific features and methods are disclosed as exemplary embodiments for dynamically fixing price of the products in e-commerce environment.

## Claims

1. A computer implemented method for dynamically fixing price of a product in an electronic commerce (e-commerce) environment, the method comprising:

   obtaining product information associated with the product, wherein the product information is indicative of at least characteristics of the product and manufacturing complexity of the product;
   extracting real time market price, of at least one product constituent indicated in the product information, from at least one market information source;
   evaluating a market price factor for the product based on the extracting, wherein the market price factor is indicative of an impact of market conditions on a price of the product; and
   fixing a real time selling price for the product based at least on the product information and the market price factor.

2. The method as claimed in claim 1, wherein the product includes at least a jewelry item.

3. The method as claimed in claim 1, wherein the product information comprises product type, total weight of the product, product constituents, weight of each of the product constituents, and design attributes of the product.

4. The method as claimed in claim 1, wherein the fixing is further based on predefined pricing rules.

5. The method as claimed in claim 1, wherein the fixing comprises computing a tax amount for the product.

6. The method as claimed in claim 1, wherein the method further comprises displaying the fixed real time selling price on the e-commerce portal.

7. An electronic commerce (e-commerce) system (102) comprising:

   a processor (202); and
   a memory (206) coupled to the processor (202), the memory (206) comprising:

      a pricing module (112) configured to:

         obtain product information (110) associated with a product from at least one product information source, wherein the product information (110) is indicative of characteristics of the product and manufacturing complexity of the product;

evaluate a market price factor for the product based on extracting a real time market price of at least one product constituent indicated in the product information (110), from at least one market information source, wherein the market price factor is indicative of impact of market conditions onto a price of the product; and

fix a real time selling price for the product based at least on the product information (110) and the market price factor.

8. The e-commerce system (102) as claimed in claim 7, wherein the pricing module (112) is configured to selectively obtain the product information (110) from the at least one product information source, based on predefined information extraction rules (219).

9. The e-commerce system (102) as claimed in claim 7, wherein the product information (110) comprises product type, total weight of the product, product constituents, weight of each of the product constituents, and design attributes of the product.

10. The e-commerce system (102) as claimed in claim 7, wherein the pricing module (112) is further configured to fix the real time selling price based further on predefined pricing rules.

11. The e-commerce system (102) as claimed in claim 7, wherein the pricing module (112) is further configured to display the fixed real time selling price on the e-commerce portal.

12. The e-commerce system (102) as claimed in claim 7, wherein the pricing module (112) is further configured to compute a tax amount for the product to fix the real time selling price.

13. A computer-readable medium having embodied thereon a computer program for executing a method for electronic commerce comprising:

obtaining product information associated with a product on an e-commerce portal, wherein the product information is indicative of at least characteristics of the product and manufacturing complexity of the product;

extracting real time market price, of at least one product constituent indicated in the product information, from at least one market information source;

evaluating a market price factor for the product based on the extracting, wherein the market price factor is indicative of an impact of market conditions onto the price of the product; and

fixing a real time selling price for the product based at least on the product information and the market price factor.

Fig. 1

E-COMMERCE SYSTEM 102

PROCESSOR(S) 202    INTERFACES(S) 204

MEMORY 206

MODULES 208

PRICING MODULE 112

EXTRACTION MODULE 212    EVALUATION MODULE 214

PRICE GENERATION MODULE 216

OTHER MODULE(S) 218

DATA 210

INFORMATION EXTRACTION RULES 219    MARKET DATA 220

PRICING RULES 222    OTHER DATA 224

DATABASE 108

PRODUCT INFORMATION 110

Fig. 2

300

302

OBTAINING PRODUCT INFORMATION ASSOCIATED WITH A PRODUCT ON
AN E-COMMERCE PORTAL

304

EXTRACTING REAL TIME MARKET PRICE OF AT LEAST ONE PRODUCT
CONSTITUENT INDICATED IN THE PRODUCT INFORMATION FROM AT
LEAST ONE MARKET INFORMATION SOURCE

306

EVALUATING A MARKET PRICE FACTOR FOR THE PRODUCT BASED ON
THE EXTRACTING

308

FIXING A REAL TIME SELLING PRICE FOR THE PRODUCT BASED AT
LEAST ON THE PRODUCT INFORMATION AND THE MARKET PRICE
FACTOR

# Fig. 3

**EUROPEAN SEARCH REPORT**

Europäisches
Patentamt
European
Patent Office
Office européen
des brevets

Application Number

EP 13 15 4166

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/238497 A1 (MILNE JOEL TYLER [US] ET AL) 29 September 2011 (2011-09-29) * the whole document * | 1-13 | INV. G06Q30/02 G06Q30/00 |
| X | US 2010/324972 A1 (BROOKE STEVEN R [US] ET AL) 23 December 2010 (2010-12-23) * the whole document * | 1-13 | |
| X | US 2001/047308 A1 (KAMINSKY JOSEPH [US] ET AL) 29 November 2001 (2001-11-29) * the whole document * | 1-13 | |

TECHNICAL FIELDS
SEARCHED        (IPC)

G06Q

The present search report has been drawn up for all claims

| Place of search | Date of completion of the search | Examiner |
|---|---|---|
| Munich | 15 April 2013 | Lopes Margarido, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                  EP 13 15 4166

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2013

| Patent document cited in search report | | Publication date | Patent family member(s) | | Publication date |
|---|---|---|---|---|---|
| US 2011238497 | A1 | 29-09-2011 | US 2011238497 A1 | | 29-09-2011 |
| | | | WO 2011119943 A2 | | 29-09-2011 |
| US 2010324972 | A1 | 23-12-2010 | NONE | | |
| US 2001047308 | A1 | 29-11-2001 | NONE | | |

EPO FORM P0459

For more details about this annex : see Official Journal of the European Patent Office, No. 12/82